# EUROPEAN PATENT SPECIFICATION

(11) **EP 0 830 813 B1**
(45) Date of publication and mention of the grant of the patent: **19.06.2002**
(21) Application number: 97307204.4
(22) Date of filing: 17.09.1997
(51) Int. Cl.: A01N 43/54

(54) **Fungicidal compositions**
Fungizide Zusammensetzungen
Compositions fongicides

(30) Priority: 19.09.1996 GB 9619534
(43) Date of publication of application: 25.03.1998
(73) Proprietor: Aventis CropScience UK Limited, Hauxton, Cambridge CB2 5HU (GB)
(72) Inventor: Hagemeister, Heinz, 40549 Düsseldorf (DE); Milling, Richard John, 65926 Frankfurt am Main (DE)
(74) Representative: Waldman, Ralph David

(56) References cited:
- EP-A- 0 310 550
- CHEMICAL ABSTRACTS, vol. 90, no. 7, 12 February 1979 Columbus, Ohio, US; abstract no. 49461, Y.UESUGI ET AL.: "Inhibition of fungal metabolism of some organophosphorous compounds by piperonyl butoxide" XP002051209 & AGRIC.BIOL.CHEM., vol. 42, no. 11, 1978, pages 2181-2183,
- CHEMICAL ABSTRACTS, vol. 105, no. 1, 7 July 1986 Columbus, Ohio, US; abstract no. 2105, M.GULLINO ET AL.: "Antagonism of iprodione toxicity to Botrytis cinerea by mixed function oxidase inhibitors" XP002051210 & PESTIC.SCI., vol. 17, no. 2, 1986, pages 143-149,
- DATABASE CROPU STN-International STN-accession no. 97-82131, S.A.JOHNSTON ET AL.: "Evaluation of fungicides for the control of foliar and fruit diseases on processing tomatoes, 1995" XP002051211 & FUNGIC.NEMATIC.TESTS, vol. 51, 1996, page 165

## Description

### Field of the invention

This invention relates to new fungicidal compositions.

Various anilinopyrimidines are used as agricultural fungicide useful for controlling a number of crop diseases, and especially fungal diseases of cereals. Thus, EP-A-0310550 discloses 2-anilino-pyrimidine derivatives which have fungicidal activity.

In Chemical Abstract, vol. 90, no. 7, 1979, abstract no. 49461, it is disclosed the synergistic effect of piperonyl butoxide on the fungicidal activity of two organophosphorus compounds. In Chemical Abstreact, vol. 105, no. 1, 1986, abstract no. 2105, piperonyl butoxide is disclosed as inhibitor of the fungitoxicity of iprodione.

We have now found that piperonyl butoxide, which is known as an insecticide synergist but has never been used in fungicidal formulations with anilinopyrimidines, can enhance the activity of certain anilinopyrimidines.

The invention thus provides a mixture which comprises
a) an anilinopyrimidine fungicide of formula I 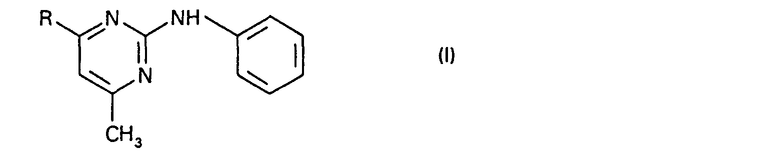 where R is methyl, cyclopropyl or 1-propynyl, and
b) piperonyl butoxide.

The compounds of formula I are known fungicides and have the common names pyrimethanil, when R is methyl, cyprodinil, when R is cyclopropyl and mepanipyrim when R is 1-propynyl.

The invention also includes fungicidal compositions which comprise the mixture together with agricuturally acceptable diluents.

The ratio of a) to piperonyl butoxide can vary over a wide range, but it is generally within the range 5:1 to 1:5, preferably 3:1 to 1:1.

The compositions of the invention are active against a wide range of fungi, e.g. powdery mildew (*Erysiphe graminis*) on cereal crops such as wheat, barley, oats and rye and other cereal diseases such as net blotch (*Pyrenophora teres*), leaf blotch (*Rhynchosporium secalis*) and eyespot (*Pseudocercosporella herpotrichoides*). The compositions are also useful in combating, e.g. *Botrytis cinerea, Leptosphaeria nodorum, Septoria tritici, Venturia inaequalis* and *Altenaria* spp. on fruit and vegetables.

The compositions of the invention may be employed in many forms and are often most conveniently prepared in aqueous form immediately prior to use. One method of preparing such a composition is referred to as "tank mixing" in which the ingredients in their commercially available form are mixed together by the user in a quantity of water.

In addition to tank mixing immediately prior to use, the compositions containing the mixture may be formulated into a more concentrated primary composition which is diluted with water or other diluent before use. Such compositions may comprise a surface active agent in addition to the active ingredients and examples of such compositions are as follows.

It can be a dispersible solution which comprises the active ingredients dissolved in a water-miscible solvent with the addition of a dispersing agent. Alternatively it can comprise the ingredients in the form of a finely ground powder in association with a dispersing agent and intimately mixed with water to give a paste or cream which can if desired be added to an emulsion of oil in water to give a dispersion of active ingredients in an aqueous oil emulsion.

The invention is illustrated in the following examples, in which PBO is piperonyl butoxide

### Example 1

Winter wheat was sprayed with cyprodinil, PBO and mixtures of the two. Thirty three days after application the winter wheat was assessed for levels of *Leptosphaeria nodorum* compared with untreated cereal, whereby the level of control could be calculated. Results (average of 4 replicates) are shown below.

| Component | Application rate (g ai / ha) | % control |
|---|---|---|
| cyprodinil | 600 | 23.1 |
| PBO | 300 | 0.0 |
| cyprodinil + PBO | 600 + 300 | 64.1 |

### Example 2

In a similar experiment levels of *Erysiphe graminis* infection were determined after 30 days. Results (average of 4 replicates) are shown below.

| Component | Application rate (g ai / ha) | % control |
|---|---|---|
| cyprodinil | 600 | 34.4 |
| PBO | 300 | 0.0 |
| cyprodinil + PBO | 600 + 300 | 65.5 |

### Example 3

In a similar experiment, levels of *Leptosphaeria nodorum* and *Septoria tritici* mixed infection were assessed 23 days after application. Results (average of 4 replicates) are shown below.

| Component | Application rate (g ai / ha) | % control |
|---|---|---|
| cyprodinil | 600 | 0.0 |
| PBO | 300 | 0.0 |
| cyprodinil + PBO | 600 + 300 | 69.2 |

### Example 4

In a similar experiment levels of *Elysiphe graminis* infection were determined after 14 days. Results (average of 3 replicates) are shown below.

| Component | Application rate (g ai/ha) | % control |
|---|---|---|
| cyprodinil | 150 | 35 |
| cyprodinil | 300 | 67 |
| cyprodinil | 600 | 98 |
| PBO | 300 | 0.0 |
| cyprodinil + PBO | 150 + 300 | 75 |
| cyprodinil + PBO | 300 + 300 | 92 |
| cyprodinil + PBO | 600 + 300 | 100 |

## Claims

1. A mixture which comprises
a) an anilinopyrimidine fungicide of formula I 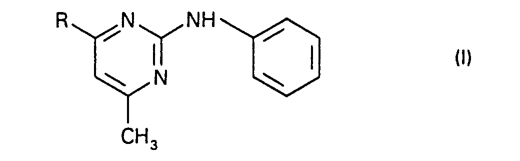 where R is methyl, cyclopropyl or 1-propynyl, and
b) piperonyl butoxide.

2. A mixture according to claim 1, in which a) is cyprodinil.

## Patentansprüche

1. Gemisch, enthaltend
a) ein Anilinoyrimidin-Fungizid der Formel I: 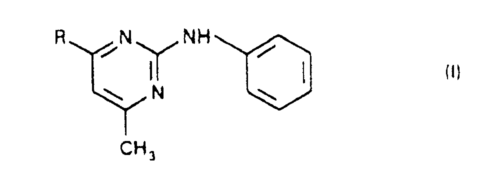 worin R Methyl, Cyclopropyl oder 1-Propinyl ist, und
b) Piperonylbutoxid.

2. Gemisch nach Anspruch 1, in dem a) Cyprodinil ist.

## Revendications

1. Mélange comprenant
a) une anilinopyrimidine fongicide de formule (I): 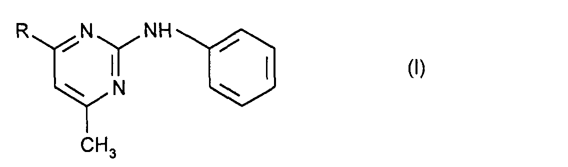 dans laquelle R représente le radical méthyle, le radical cyclopropyle ou le radical 1-propynyle, et
b) du butylate de pipéronyle.

2. Mélange selon la revendication 1, dans lequel a) est le cyprodinil.
